# EUROPEAN PATENT APPLICATION

(11) **EP 1 369 156 A1**
(43) Date of publication of application: **10.12.2003**
(21) Application number: 01273602.1
(22) Date of filing: 01.02.2001
(51) Int. Cl.: B01D 21/00, B01D 21/02, C02F 1/52, B01D 29/05, B01D 29/86

(54) **AERATION TYPE UNDERWATER SCREEN SYSTEM**

(71) Applicant: Suikenkikou Co Ltd, Nagasaki-City, Nagasaki 852-8121 (JP)
(72) Inventor: YAMASHITA, Chikaroku, Nagasaki-City, Nagasaki 852-8121 (JP); Takemori, Asamitsu, Nagasaki 852-8014 (JP)
(74) Representative: Bongiovanni, Simone
(86) International application number: JP0100710
(87) International publication number: WO02060554

(57) **Abstract**

An aeration type underwater screen system capable of decomposing waste material into fine particles by a fine mesh screen (2) installed vertically with a slope and a swing flow without allowing the fine mesh screen (2) to be clogged by air bubbles produced from a diffusion tube (6), comprising the fine mesh screen (2) installed on a screen mounting means (3) for mounting the fine mesh screen (2) so as to divide a solid-liquid separation tank (1) into a sewage flow-in side (1a) and a filtrated liquid drain side (1b) through the fine mesh screen (2) provided in the solid-liquid separation tank (1) and so that the upper side thereof is fallen down, the diffusion tube (6), a sewage flow-in means (7), a filtrated liquid drain means (8), and a sediment drain means (9) for draining sediment installed on the underside of the sewage flow-in side (1a).

## Description

### Filed of the invention

The present invention relates to a bubble filter system in water is used in wastewater dispose apparatus for disposing high concentration wastewater, in pre work separating the solid and liquid of high concentration wastewater such as feces and emiction, wastewater fixed with impurity; industry wastewater and so on. Now point out especially, the present invention is a bubble filter system in water that set micro filter sieve(s) in pre work solid and liquid separator of wastewater dispose apparatus to not fill up impurity and at the same time filter wastewater and decompose fine and drain deposit matter form wastewater.

### Background of the invention

In the well-known high concentration wastewater dispose apparatus, the deposit effect of deposit pool is used for separating liquid and solid; bar screen of 50mm or 20mm spaced cell is disposed among the waterway, or something of automatic draw up with micro filter sieve is used.

But, when the well-known high concentration wastewater dispose apparatus is used in the deposit pool, the efficiency will be decreased because it need be saved for a long time. And, filter sieve often be filled up with filth when filter sieve is used, further, the automatic draw up device has an over-complex structure and the cost of which is expensive, and, the filth drawn up fixed with feces mass is easily become the source of air pollution; disease and breed mosquito and worm, and, the filter sieve with large holes and the filter sieve with small holes can not bar the hair and so on, and cause wastewater dispose apparatus, bump block later, further, with the high dispose and automatic dispose apparatus, the inductor will produce wrong judge action.

So, the object of the present invention is to provides a bubble filter system in water, the character of which is to make the filth and impurity can not fill up on the micro filter sieve by the oblique erect micro filter sieve(s) and the bubbles produced from deflate pipe, and produce revolving convection to decompose filth fine by the revolving convection. The present invention has a simple structure and the cost of which is low, and can carry separate work continuously to separate high concentration wastewater.

### Summary of the present invention

The present invention has resolved these problems by thorough study. The claim 1 said bubble filter system in water comprises: micro filter sieve disposed in solid and liquid separator separating the wastewater inflow side and the filtrate drain side and being tilt to the filtrate drain side; micro filter sieve attached device setting said micro filter sieve; micro filter sieve attached to filter sieve attached device, most of bubbles cannot pass through but wastewater can pass through said micro filter sieve; wastewater inflow side under micro filter sieve is provided with air deflate pipe connecting with air produce device through air tubing that can let bubbles produced move up along the face of micro filter sieve form deflate pipe. Wastewater inflow side of solid and liquid separator is provided with wastewater inflow device used for wastewater flowing into; filtrate drain device used for draining filtrate from the filtrate drain side of solid and liquid separator; deposit matter drain device used for draining deposit matter form the bottom of wastewater inflow side of solid and liquid separator.

And, the bubble filter system in water according to claim 1, the micro filter sieve can be set on the filter sieve attached device in at least two directions.

And, the bubble filter system in water according to claim 1 or claim 2, plural micro filter sieves can be set latitudinal continuously on the filter sieve attached device.

Further, the bubble filter system in water according to one of claim 1 to claim 3, the filter sieve attached device is provided with filter sieve frame of micro cell resin membrane on the filtrate drain side besides the said micro filter sieve disposed thereon, wastewater inflow side under filter sieve frame is provided with drain pipe connected to air produce device through air tubing, the said drain pipe make he bubble move up along the face of the filter sieve frame.

The bubble filter system in water according to the present invention, comprise: micro filter sieve separating the wastewater inflow side and the filtrate drain side and being tilt to the wastewater inflow side; the bottom of wastewater inflow side of said micro filter sieve is provided with deflate pipe, said deflate pipe ejects air from lower part along the micro filter sieve, bubble came from the drain pipe move up, the bubbles attached to micro filter sieve to bring solid object move up clean the face of micro filter sieve to prevent the sieve cell be filled up with filth; and, the moving up bubbles revolve the wastewater then produce revolve convection in up and down directions on the wastewater inflow side of the solid and liquid separator make solid object contact with bubbles; face of micro filter sieve and produce fine decomposition. And, the heavier destiny object will deposit to the bottom of wastewater inflow side of solid and liquid separator, and the lighter destiny object such as hair, rag, plastic that cannot be decomposed will turn around repeatedly on the side of wastewater of solid and liquid separator.

### Detailed description of the embodiment

The present invention relates to a bubble filter system in water used mainly in wastewater dispose apparatus for disposing high concentration wastewater, in pre work separating the solid and liquid of the high concentration wastewater such as dung and emiction, wastewater fixed with impurity, industry wastewater and so on. Now point out especially, the present invention is a bubble filter system in water that set micro filter sieve 2 in pre work solid and liquid drain separator 1 of wastewater dispose apparatus to not fill up impurity and at the same time filter filth and discompose finely and drain wastewater form wastewater. Solid and liquid separator 1 used for disposing high concentration wastewater, micro filter sieve 2 disposed in solid and liquid separator 1 separating the wastewater inflow side 1a and the filtrate drain side 1b and being tilt to the filtrate drain side 1a; micro filter sieve attached device 3 setting said micro filter sieve; micro filter sieve 2 attached to filter sieve attached device 3, most of bubbles cannot pass through but wastewater can pass through said micro filter sieve 2; wastewater inflow side under micro filter sieve 2 is provided with air deflate pipe 6 connecting with air produce device 4 through air tubing 5 that can let bubbles produced move up along the face of micro filter sieve 2 form deflate pipe 6. Wastewater inflow side 1a of solid and liquid separator 1 is provided with wastewater inflow device 7 used for wastewater flowing into; filtrate drain device 8 used for draining filtrate from the filtrate drain side 1a of solid and liquid separator 1; deposit matter drain device 9 used for draining deposit matter form the bottom of wastewater inflow side 1a of solid and liquid separator 1.

And, the bubble filter system in water according to claim 1, the micro filter sieve 2 can be set on and removed from the filter sieve attached device 3 in at least two directions.

And, the bubble filter system in water according to claim 1 or claim 2, plural micro filter sieves 2 can be set latitudinal continuously on the filter sieve attached device 3.

Further, the bubble filter system in water according to one of claim 1 to claim 3, the filter sieve attached device 3 is provided with filter sieve frame of micro cell resin membrane on the filtrate drain side 1a besides the said micro filter sieve 2 disposed thereon.

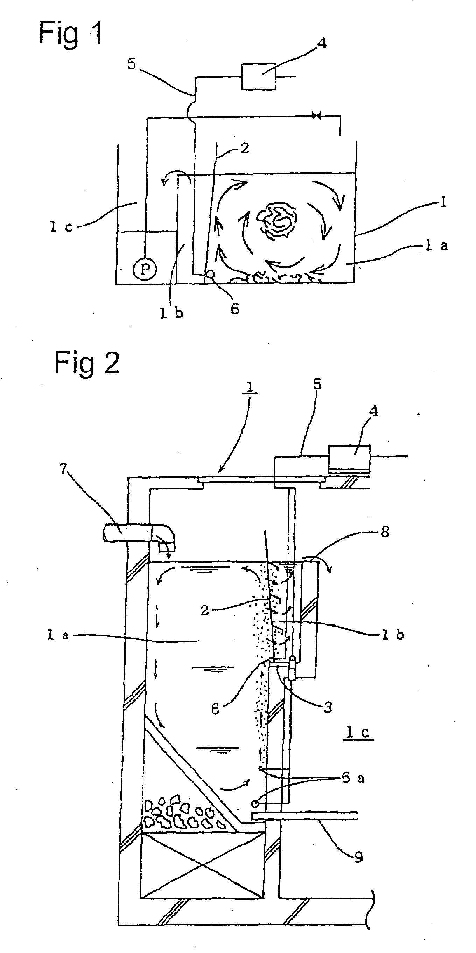

The bubble filter system in water according to present invention, as shown in FIG. 1 of sketchy principal view, oblique micro filter sieve 2 separate solid and liquid separator 1 into wastewater inflow side 1a and filtrate drain side 1b two parts, drain pipe 6 is disposed in the lower part of micro filter sieve 2, bubbles eject from drain pipe 6 move up along the face of micro filter sieve 2 to decompose solid object and at the same time come into being revolve convection, solid object with higher density will deposit down, indecomposable solid object with lighter density will be concentrate to center part of revolving convection.

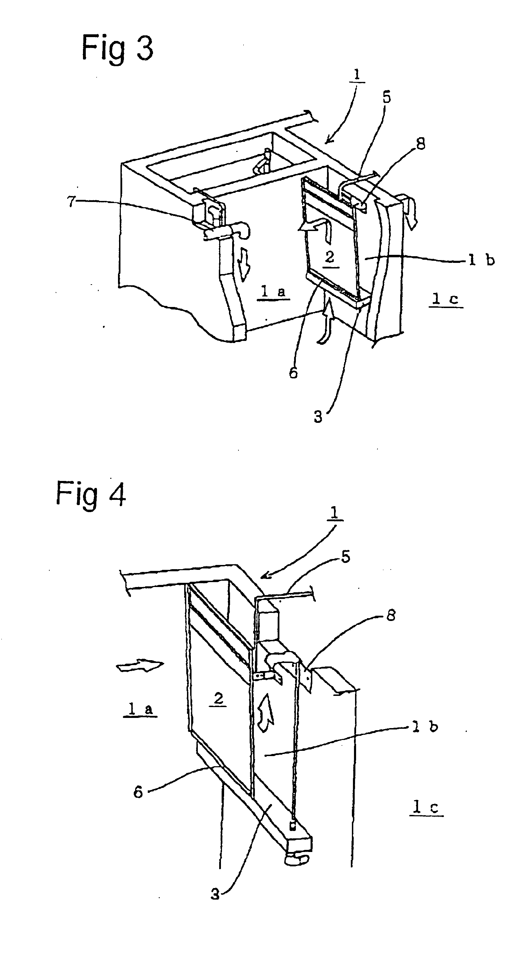

And, the embodiment of the filter system in water according to the present invention, as shown in FIG. 2 and FIG. 4, solid and liquid separator 1 used for separating solid and liquid of high concentration wastewater, especially used in solid and liquid pre separate work of high concentration wastewater such as dung and emiciton, wastewater fixed with impurity, industrial wastewater, and used in remove work for removing the solid ingredient form wastewater fixed with powder micro solid ingredient; the solid and liquid separator 1 be separated into wastewater inflow side 1a and filtrate drain side 1b two parts by aftermentioned micro filter sieve 2, because of overflow take place on the filtrate drain side 1b, so water storage part 1c be set on the filtrate drain side 1b.

Namely, filter sieve attached device 3 is used for setting aftermentioned micro filter sieve 2, the style of setting, is to let the top of the micro filter sieve 2 tilt approximate 5 degree to wastewater inflow side, and can make the bubbles produced from drain pipe 6 move up along the face of micro filter sieve 2 is ok; for instance, filter sieve attached device 3 is a latitude bar attached on inner wall of solid and liquid separator 1, the bottom, two sides of solid and liquid separator 1 is provide with concave groove which the lower part of micro filter sieve 2 can insert into in latitudinal direction, when the lower part and the two sides of micro filter sieve 2 be insert into the groove, the interior of solid and liquid separator 1 can be separated entirely into wastewater inflow side 1a and filtrate drain side 1b two parts.

Micro filter sieve 2 is composed of stainless steel plate and so on, plural holes with diameter of 1-3mm disposed on the face of micro filter sieve 2 when micro filter sieve 2 be set on said filter sieve attached device 3, said holes will prevent the bubbles produced from aftermentioned drain pipe pass but let wastewater pass through.

Drain pipe 6 is connected with air produce device 4 such as ventilator by air tubing 5, and is set on the wastewater inflow side under micro filter sieve 2, and is same wide as said micro filter sieve 2.

Wastewater inflow device 7 is a tubing system used for wastewater's inflow is disposed in the wastewater inflow side 1a of solid and liquid separator 1; filtered drain system 8 is a tubing system used for draining filtrate and is disposed in filtrate drain side 1b of solid and liquid separator 1, and, drain filtrate to water storage part 1c by overflow; deposit matter drain device 9 is a tubing system used for draining solid object such as deposit matter, mud, the work such as the inflow of high concentration, the drain of filtrate, the drain of deposit matter can be carried by the well-known means with bump and so on.

The micro filter sieve 2 of the present invention is tilt approximate 5 degree to and set on the wastewater inflow side 1a, deflate pipe 6 is disposed under micro filter sieve 2, the bubbles produced form deflate pipe 6 move up along the face of micro filter sieve 2, the solid object such deposit matter collide the face of micro filter sieve 2 when the bubbles moving up, the collision and the impact of the bubble will carry the fine decompose.

And, the wastewater in the wastewater inflow side 1a of solid and liquid separator 1 will produce revolving convection in up and down directions when the bubbles produced from deflate pipe 6 move up in high concentration wastewater, solid object such as silt that cannot pass micro filter sieve 2 will be moved by said revolving convection, the heavier density of solid object will deposit, the lighter density of solid object will be concentrate to the center of revolving convection with slow current, so solid object will not stay the vicinity of micro filter sieve 2 and can avoid decrease the filter effect of micro filter sieve 2.

Further, plural assistant deflate pipes 6a are set spaced properly along micro filter sieve 2 above the deflate pipe 6, said plural assistant deflate pipes 6a can improve the effect of deflate pipe 6 several times, the multitude bubbles produced from assistant deflate pipes 6a will move up along face of micro filter sieve 2 and can get rid of the solid object such as silt tangled with micro filter sieve 2, solid object such as silt will collide micro filter sieve 2 when moving up of bubbles then will be fine decomposed by the collision to micro filter sieve 2 and the collision of bubbles; and, one or plural assistant deflate pipe(s) is(are) set in the wastewater inflow side 1a of solid and liquid separator 1 under deflate pipe 6 can accelerate revolving convection in up and down directions produced form wastewater inflow side 1a of solid and liquid separator 1 by the effect of air lift.

According to these, circular rotate in the center of revolving convection will get rid of hair chip, rag, and plastics and so on with lighter density by folk and so on simply.

And, deposit matter drain device such as bump, air lift device is set in the wastewater inflow side 1a of solid and liquid separator 1 drain deposit matter with higher density separated from high concentration wastewater, then operate continuously to separate wastewater.

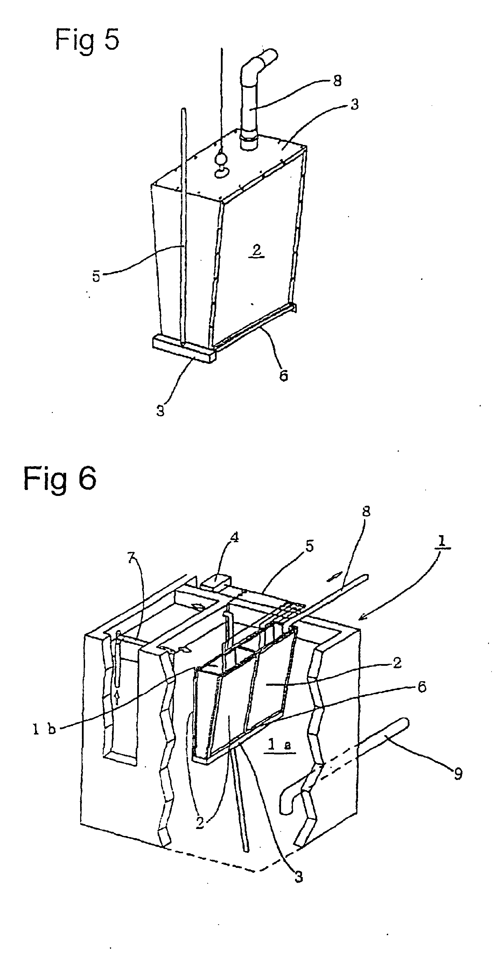

The second embodiment of the present invention, as shown in FIG. 5 FIG. 6, micro filter sieve 2 can be set on filter sieve attached device 3 in at least two directions, namely, filter sieve attached device is box-shaped and define open on its two sides, and set micro filter sieve 2 on its open.

In the similar case, wastewater inflow side 1a of solid and liquid separator 1 is located on the outer side of box-shaped object consisted of filter sieve attached device 3 and micro filter sieve 2, filtrate drain side 1b is located on the inner side of box-shaped object consisted of filter sieve attached device 3 and micro filter sieve 2.

Deflate pipe 6 can be set under micro filter sieve 2, filtrate drain device 8 used for draining filtrate from filtrate drain side 1b pass through the top plate of filter sieve attached device 3, being a tubing system.

As shown in FIG.6, said filter sieve attached device 3 can set continuously plural micro filter sieves 2 in latitudinal direction, namely, can carry mass capacity solid and liquid separate work by setting plural micro filter sieve 2.

Further, micro filter sieve 2 is full of micro cell with diameter of 15-20um synthetic resin micro cell resin membrane, in this case, cell of micro filter sieve be can enlarged to 5-10mm, because the wastewater inflow side 1a under micro filter sieve 2 is provided with deflate pipe 6 connected with air produce device 4 by air tubing 5, so bubbles can move up along face of micro filter sieve 2 and can carry away solid object filled up on micro cell resin membrane and micro filter sieve 2 and then move up with solid object.

With above-mentioned structure, the present invention can decrease effectively the trouble of bump caused from solid object such as silt's fill up, and can avoid block micro filter sieve, lighten the afford of maintenance, and can be used in instant-save dispose apparatus, the cost of which is low, and can carry fine filter dispose after install, and can get rid of solid object such as silt with a certain size, and can drain deposit matter stored on the bottom of solid and liquid separator by deposit matter drain device, produce silt and deposit matter effectively used for compost; and, can set plural micro filter sieves in at least two directions at the same time to accelerate the velocity of decomposing of solid and liquid, and, is provided with micro cell resin membrane, can drain filtrate with hardly any solid object.

### Brief description of the draws

There has a description of the draws of the present invention.
FIG. 1 is a sketchy principle view of bubble filter system in water according to the present invention;
FIG. 2 is a sketchy side view of the bubble filter system in water according to one embodiment of the present invention;
FIG. 3 is an oblique view of the main part of the bubble filter system in water according to one embodiment of the present invention;
FIG. 4 is a an oblique view of the main part of the bubble filter system in water according to the other embodiment of the present invention;
FIG. 5 is an oblique view of the main part of the bubble filter system in water according to the second embodiment of the present invention;
FIG. 6 is a sketchy oblique view of the bubble filter system in water according to the second embodiment of the present invention.

### Description of the symbols

1: solid and liquid separator
1a: wastewater inflow side
1b: filtrate drain side
1c: water storage part
2: micro filter sieve
3: filter sieve attached device
4: air produce device
5: air tubing
6: deflate pipe
7: wastewater inflow device
8: filtrate drain device
9: deposit matter drain device

## Claims

1. A bubble filter system in water, comprising: a solid and liquid separator for disposing solid and liquid separateness of high concentration wastewater; a filter sieve attached device disposed in said solid and liquid separator, micro filter sieve disposed on said filter sieve attached device title to wastewater inflow side and the same time separate the separator into wastewater inflow side and filtrate drain side two parts, plural small holes disposed on said micro filter sieve which bubbles can not pass but wastewater can pass through; drain pipe connected with air produce device by air tubing disposed on the wastewater inflow side under said micro filter sieve that can make bubbles move up along the face of micro filter sieve; and, wastewater inflow device used for infusing wastewater into said wastewater inflow side of solid and liquid separator, filtrate drain device used for deflating filtrate from filtrate drain side of said solid and liquid separator, deposit matter drain device disposed under the wastewater inflow side of said solid and liquid separator which is used for deflating deposit matter.

2. The bubble filter system in water according to claim 1, wherein said filter sieve attached device can set micro filter sieve in at least two directions.

3. The bubble filter system in water according to claim 1 or claim 2, wherein, said filter sieve attached device can set plural micro filter sieves continuously in latitudinal direction.

4. The bubble filter system in water according to one of claim 1 to claim 3, wherein, filtrate drain side of said filter sieve attached device is provided with micro cell resin membrane.
